# EUROPÄISCHE PATENTANMELDUNG

(11) **EP 2 017 232 A1**
(43) Veröffentlichungstag der Anmeldung: **21.01.2009**
(21) Anmeldenummer: 08010652.9
(22) Anmeldetag: 11.06.2008
(51) Int. Cl.: C02F 1/66, C02F 1/72

(54) **Verwendung eines anorganischen Materials in Abwasser zur Verringerung oder Vermeidung von Verschleiss von Beton durch einen lösenden Angriff**

(30) Priorität: 12.06.2007 DE 102007027074
(71) Anmelder: Schöndorfer, Peter, 83457 Bayerisch Gmain (DE)
(72) Erfinder: Schöndorfer, Peter, 83457 Bayerisch Gmain (DE); Krey, Friederike, Dr. Ing., 83435 Bad Reichenhall (DE)
(74) Vertreter: Spott, Gottfried

(57) **Zusammenfassung**

Die Erfindung betrifft die Verwendung eines anorganischen Materials, das ein Carbonat, Hydrogencarbonat, Oxid oder Hydroxid oder eine Mischung davon von Calcium und Magnesium enthält, in Abwasser zur Verringerung oder Vermeidung von Verschleiß von Beton durch einen lösenden Angriff.

## Beschreibung

Die vorliegende Erfindung betrifft die Verwendung eines anorganischen Materials, das ein Carbonat, Hydrogencarbonat, Oxid oder Hydroxid oder eine Mischung davon von Calcium und Magnesium enthält, in Abwasser zur Verringerung oder Vermeidung von Verschleiß von Beton durch einen lösenden Angriff. Insbesondere soll Beton einer ein Betonbecken umfassenden Abwasserreinigungsanlage oder Kläranlage geschützt werden, vor allem von mit Abwasser in Kontakt kommenden Wänden des Betonbeckens.

Ein lösender Angriff von Beton kann durch Säuren, insbesondere in Abwasser verdünnte, anorganische und organische Säuren, Fett und Öle sowie durch austauschfähige Salze erfolgen.

Der Angriff durch Säuren ist abhängig von der Konzentration der gelösten Säure und ihrer Stärke.

Starke Säuren, wie Mineralsäuren, z. B. Salzsäure, Salpetersäure und Schwefelsäure, liegen in Wasser vollständig dissoziiert vor. Der pH-Wert einer starken Säure ergibt sich aus der Konzentration der Säure und lässt sich aus der Konzentration der Protonen berechnen. Starke Säuren können alle Bestandteile eines Zementsteins unter Bildung von Calcium-, Aluminium- und Eisensalzen sowie Kieselgel auflösen. Starke Säuren sind gemäß dieser Beschreibung solche Säuren, die einen pKs-Wert, der auch protochemisches Normalpotential eines Brönstedschen Säure-Base-Systems genannt wird, von < 0, vorzugsweise im Bereich von -7,0 bis -1,00, aufweisen. Die Säure HCl weist z.B. für das Säure-Base-System HCl ⇆ H⁺ + Cl⁻ einen pKs-Wert von -7,0 auf. Die Schwefelsäure weist für das Säure-Base-System H₂SO₄ ⇆ H⁺ + HSO₄⁻-einen pKs-Wert von -3,0 auf. Die Salpetersäure weist für das Säure-Base-System HNO₃ ⇆ H⁺ + NO₃⁻ einen pKs-Wert von -1,37 auf.

Schwache Säuren liegen in Wasser nicht vollständig dissoziiert vor. Bei der Berechnung des pH-Wertes einer schwachen Säure muss deshalb ihr pKs-Wert berücksichtigt werden. Schwache Säuren sind gemäß dieser Beschreibung solche Säuren, die einen pKs-Wert im Bereich von 1,90 bis 9,5 aufweisen, vorzugsweise im Bereich von 3,5 bis 7, besonders bevorzugt im Bereich von 4,75 bis 6,5. Kohlensäure ist beispielsweise eine schwache Säure, die sich nur zu 0,1 % in Wasser löst. Ihr pKs-Wert weist für das Säure-Base-System CO₂ + H₂O ⇆ H⁺ + HCO₃⁻ einen pKs-Wert von 6,35 auf. Weitere schwache Säuren sind beispielsweise Essigsäure mit einem pKs-Wert von 4,75 für das Säure-Base-System CH₃CO₂H ⇆ H⁺ + CH₃CO₂⁻ sowie Milchsäure mit einem pKs-Wert von 3,73.

Eine schwache Säure reagiert mit Ca(OH)₂, basischen Hydratphasen und mit Carbonaten, zum Beispiel mit Kalkstein (CaCO₃), unter Bildung von wasserlöslichem Calciumhydrogencarbonat. Sie kann mit der Tonerde und dem Eisenoxid des Zementes keine löslichen Salze (Hydrogencarbonate) bilden. Beim Einwirken von Kohlensäure, insbesondere Kalk lösender Kohlensäure, auf Zementstein bleiben daher Aluminium- und Eisenhydroxid bzw. Eisen- oder Aluminiumoxidhydrat zurück.

Die Abgase zahlreicher Brennstoffe, z. B. Kohle und Heizöl, enthalten Schwefeldioxid (SO₂), das mit Wasser schweflige Säure bildet. Obwohl die Konzentration von Schwefeldioxid in der Luft wesentlich geringer ist als diejenige von Kohlendioxid bezogen auf die Einwirkungsdauer von Kohlendioxid (Kohlensäure), wird wegen der größeren Säurestärke der schwefligen Säure Beton angegriffen, allerdings zeigen sich Schäden (Abmehlen der Betonaußenschicht) erst nach längerer Einwirkungsdauer. Moorböden können Eisensulfide (z. B. Pyrit) enthalten, die nach Oxidation des Schwefels in Gegenwart von Wasser schweflige Säure bilden. Da letztere dann in wesentlich größerer Konzentration als in der Luft vorliegt, werden Betonbauteile dadurch auch wesentlich rascher angegriffen. Darüber hinaus können durch Weiteroxidation des Sulfits mit Luftsauerstoff auch Sulfate gebildet werden, die bei Betonbauwerken zu einem treibenden Angriff führen.

Schwefelwasserstoff (H₂S) ist ebenfalls eine schwache Säure, die Beton im Gasraum von Abwasserreinigungsanlagen oberhalb des Wasserspiegels angreifen kann. Der pKs-Wert beträgt 6,99 für das Säure-Base-System H₂S ⇆ H⁺ + HS-. Voraussetzung für eine biogene Schwefelsäurekorrosion (BSK) ist jedoch das Vorhandensein von organischen und anorganischen Schwefelverbindungen im Abwasser bzw. in der sogenannten Sielhaut von Abwasserleitungen. Schwefelwasserstoff wird z. B. aus Sulfaten in Gegenwart von sulfatreduzierenden Bakterien gebildet, wenn das Abwasser durch Sauerstoffmangel vom aeroben in den anaeroben Zustand übergeht. Dieser Prozess wird durch höhere Temperaturen und durch fallenden pH-Wert des Abwassers beschleunigt. Derartige Bedingungen treten besonders bei Abwasseranlagen in heißen Ländern auf, haben aber auch in Ländern, wie Deutschland, Schweiz und Österreich, zu erheblichen Schäden in Abwassersystemen, wie Abwasserrohrsystemen oder in Abwasserreinigungsanlagen, geführt. Der Schwefelwasserstoff entweicht, verstärkt im Bereich turbulenter Strömung, in den Gasraum über dem Abwasserspiegel, und kann auf feuchten Betonoberflächen in Anwesenheit von Luftsauerstoff und unter der Wirkung von aeroben Mikroorganismen, z.B. Thiobakterien, wie Thiobazillus concretivorus, Schwefelsäure bilden. Dabei sind neben den angebotenen Schwefelwasserstoffmengen vor allem die Temperaturen in dem Abwasser maßgebend, da die mikrobiologisch gesteuerten Oxidationsvorgänge des Schwefelwasserstoffes zur Schwefelsäure am schnellsten bei Temperaturen von etwa 30 °C ablaufen. Es kann aber schon oberhalb von 18 °C aus Schwefelwasserstoff in Gegenwart von Sauerstoff und Feuchtigkeit eine sehr stark angreifende 6-prozentige Schwefelsäure mit einem pH-Wert von 0,1 gebildet werden. Durch die Schwefelsäure wird der basische Zementstein des Betons und gegebenenfalls carbonatischer Zuschlag einem lösenden Angriff unterzogen. Durch Gips- und Ettringitausscheidungen im Betongefüge kommt es gleichzeitig zu einem treibenden Angriff. Bisher wurde als vorbeugende Maßnahmen gegen Schwefelwasserstoffentwicklung in Abwassersystemen vorgeschlagen in den Abwassersystemen ein gleichmäßiges und ausreichendes Gefälle der Rohrleitungen, keine Turbulenzen, keine Totbereiche zur Vermeidung von Schlammbildung und eine gute Belüftung vorzusehen.

Der lösende Angriff von Fetten und Ölen, z.B. pflanzlichen Fetten und Ölen, die Glycerinester mehrfach ungesättigter Fettsäuren darstellen, auf Beton kann dadurch erfolgen, dass sie durch das Calciumhydroxid des Zementsteins verseift werden, indem die Ester durch Wasseraufnahme gespalten werden. Die fettsauren Calciumsalze sind wasserlöslich und führen zur Schwächung des Betongefüges. Insbesondere bei höheren Temperaturen werden Betone durch pflanzliche Fette und Öle stark angegriffen.

Zu den austauschfähigen Salzen, die Beton lösend angreifen können, gehören vor allem Magnesium- und Ammoniumsalze, wie Magnesiumchlorid und Ammoniumchlorid. Sie greifen den Beton an, indem sie einerseits mit dem Kalkhydrat des Zementsteins leicht lösliche Chloride bilden. Beim Einwirken von Ammoniumchlorid auf basischen Zementstein kann Ammoniak in gasförmiger Form entweichen. Dadurch kann eine Neutralisation des Calciumhydroxids erfolgen, wobei zusätzlich leicht lösliches Calciumchlorid gebildet wird. Chloridquellen sind Meerwasser, Salzlagerstätten, Tausalzlösungen und Chlorwasserstoff. Chlorwasserstoff wird beispielsweise bei einer durch Brand verursachten Zersetzung von Polyvinylchlorid (PVC) in Rohrleitungen, Kabelummantelungen, Fensterrahmen und Behältern aus PVC freigesetzt und mit Löschwasser in Salzsäure umgewandelt. Bei Berührung mit Beton reagieren die Salzsäuredämpfe mit dem Zementstein unter Bildung von Calciumchlorid, welches sich zunächst in der Betonaußenzone anreichert.

Eine der bedeutendsten Ursachen eines lösenden Angriffs von Beton ist jedoch der Angriff durch Kohlensäure, insbesondere freier Kalk lösender Kohlensäure. Bisher von der Österreichischen Vereinigung für Beton- und Bautechnik vorgeschlagene Maßnahmen gegen den Angriff von Kohlensäure, insbesondere Kalk lösender Kohlensäure, auf Beton betreffen Maßnahmen, die hauptsächlich den Beton selbst betreffen. So wurde vorgeschlagen eine Einplanung einer erhöhten Betondeckung bei Neuanlagen als Verschleißschicht vorzusehen, bei der Herstellung von Beton Bindemittel mit einem geringen Ca(OH)₂-Gehalt im erhärteten Zementstein einzusetzen und kein Kalksteinmehl als Zusatzstoff zu verwenden. Siehe dazu "Neue Lösungen für Kläranlagenbeton" in bau.zeitung 6/07, Seiten 33 bis 36. Diese Maßnahmen, die den Beton selbst betreffen haben den Nachteil, dass sie nur für den Bau von neuen Abwasserreinigungsanlagen oder Kläranlagen eingesetzt werden können oder bei einer grundlegenden Sanierung solcher Anlagen. Bei Anlagen, die bereits im Betrieb sind und ohne Sanierung weiter betrieben werden müssen, können diese Maßnahmen nicht angewendet werden.

Ferner wurde eine Schutzschicht aus Kunststoff oder auf Silikatbasis vorgeschlagen, z. B. durch eine Nachbehandlung von Beton mit Epoxid- oder Acrylatfilmen oder eine Imprägnierung auf Silikatbasis. Eine solche Schutzschicht kann zwar den tatsächlichen Angriff verhindern, eine solche Schutzschicht ist jedoch aufwändig und kostenintensiv. Außerdem kann durch eine lokale Beschädigung der Schutzschicht dennoch eine Beschädigung auftreten, die längere Zeit unerkannt bleibt und so zu einem signifikanten Angriff des Betons führen. In dem oben bereits genannten Artikel "Neue Lösungen für Kläranlagenbeton" in bau.zeitung 6/07, Seiten 33 bis 36, wird beschrieben, dass eine erhebliche Zahl von Abwasserreinigungsanlagen oder Kläranlagen Betonschäden aufweisen und insbesondere Dichteschäden aufweisen. Das Aufbringen einer Schutzschicht kann aber ebenfalls nur bei neuen Anlagen oder bei Altanlagen nur durch eine Unterbrechung des Betriebs des Systems durchgeführt werden. Dies ist besonders bei Abwasserreinungunsanlagen oder Kläranlagen, Kanalisationssystemen, Abwasserrohren nachteilig, da den Betreibern oft nur eine einzige Anlage zur Verfügung steht.

Die Aufgabe der vorliegenden Erfindung ist es daher die Nachteile aus dem Stand der Technik zu vermeiden, insbesondere einen Verschleiß von Beton durch einen lösenden Angriff zu verringern oder gar ganz zu vermeiden, insbesondere soll ein Verschleiß von Beton durch den lösenden Angriff einer Säure, Fett und Öle sowie durch austauschfähige Salze verringert oder vermieden werden. Besonders bevorzugt soll dies in Anlagen oder Leitungen erfolgen, die Beton umfassen und in die Abwasser gelangt, insbesondere Abwasserreinigungsanlagen oder Kläranlagen, Abwasserkanalisationssysteme, Abwasserrohre und dergleichen.

Diese Aufgabe wird nach Anspruch 1 gelöst durch die Verwendung eines anorganischen Materials, das ein Carbonat, Hydrogencarbonat, Oxid oder Hydroxid oder eine Mischung davon von Calcium und Magnesium enthält, in Abwasser zur Verringerung oder Vermeidung von Verschleiß von Beton durch einen lösenden Angriff. Weitere vorteilhafte Ausführungsformen finden sich in den Unteransprüchen.

Das anorganische Material enthält sowohl Calcium als auch Magnesium. Dieses calcium- und magnesiumhaltige Material enthält ferner ein Carbonat, Hydrogencarbonat, Oxid oder Hydroxid oder eine Mischung von zwei oder mehreren dieser Anionen. Neben diesen erfindungsgemäßen Bestandteilen kann das anorganische Material noch andere Bestandteile aufweisen, die im Folgenden auch als Nebenbestandteile bezeichnet werden. Diese Nebenbestandteile sind z. B. die Oxide von Silicium, Aluminium, Eisen, Kalium, Titan und Phosphor, die jeweils in Mengen von 0,05 bis 0,3 Gewichtsprozent vorliegen können. Ferner können in Spurenmengen von bis zu 100 ppm Chloride, Fluoride und verschiedene Metalle als weitere Nebenbestandteile enthalten sein. Die Nebenbestandteile machen in der Regel jedoch weniger als 5 Gew.-% des anorganischen Materials aus, vorzugsweise weniger als 2 Gew.-% und besonders bevorzugt weniger als 1 Gew.-%. Das anorganische Material kann zum Beispiel eine beliebige Mischung von Calciumcarbonat und Magnesiumhydrogencarbonat enthalten oder eine beliebige Mischung von Calciumoxid und Magnesiumhydroxid, oder es kann Dolomit enthalten. Vorzugsweise enthält das anorganische Material CaCO₃, MgO, MgCO₃ und CaO, besonders bevorzugt CaCO₃, MgO und MgCO₃, ganz besonders bevorzugt thermisch behandelten Dolomit.

Das erfindungsgemäß in Abwasser verwendete anorganische Material verringert oder vermeidet teilweise sogar vollständig den Verschleiß von Beton durch einen lösenden Angriff.

Das anorganische Material kann mit Wasser und/oder Kohlendioxid zu Ca(OH)₂, Mg(OH)₂, Ca(HCO₃)₂, Mg(HCO₃)₂ reagieren. Sobald diese Spezies im Abwasser vorliegen, wird insbesondere das Gleichgewicht der Lösungsreaktionen des lösenden Angriff einer Säure, insbesondere der Kohlensäure, von Beton zu ungunsten der Lösungsreaktion beeinflusst und somit der lösende Angriff von Beton verringert oder sogar ganz vermieden. Damit wird vor allem Beton geschützt, der unmittelbar mit Abwasser in Kontakt kommt, aber auch Beton über einem Wasserspiegel wird geschützt, da dieser Beton durch Säuren angegriffen werden kann, die ihn über die Gasphase angreifen, z. B. wie oben in Bezug auf den Angriff durch H₂S erläutert. Der lösende Angriff von Fetten und Ölen wird durch das erfindungsgemäß verwendete anorganische Material insbesondere dadurch verringert oder sogar ganz vermieden, dass die Calcium- und Magnesiumkomponenten mit Abwasser in ausreichendem Umfang Calcium- und Magnesiumhydroxid bilden, welche die Ester in den Fetten und Ölen spalten können ohne dass dafür Calciumhydroxid aus dem Beton herausgelöst wird.

Ferner wird insbesondere durch die Magnesiumkomponente des anorganischen Materials erfindungsgemäß vor allem der Angriff durch austauschfähige Salze verringert oder sogar ganz vermieden. Gelöstes Magnesium kann sich an Beton, der im Wesentlichen basisch reagiert, als Brucit (Mg(OH)₂) abscheiden und so eine den lösenden Angriff hemmende Schicht bilden.

Damit kann besonders vorteilhaft der Beton von Abwasserreinungunsanlagen oder Kläranlagen oder anderen Systemen, die mit Abwasser in Berührung kommen, insbesondere solche durch die Abwasser geleitet wird, vor einem lösenden Angriff ohne Unterbrechung des Betriebs geschützt werden. Dies hat den Vorteil, dass ältere Anlagen baulich nicht nachgebessert werden müssen. Bei Neuanlagen kann auf die bisher vorgeschlagenen Maßnahmen, die den Beton selbst betreffen, verzichtet werden. Ferner kann auf aufwändige und teure Beschichtungen mit Kunststoffen oder Silikaten verzichtet werden. Bei Anlagen für besonders aggressive Abwässer kann die Erfindung aber auch zusammen mit den bisher vorgeschlagenen Maßnahmen, die den Beton selbst betreffen, und/oder den vorgeschlagenen Schutzschichten gemeinsam eingesetzt werden.

Bei einer bevorzugten Ausführungsform enthält das anorganische Material 0 bis 30 Gew.-% MgO, 0 bis 50 Gew.-% MgCO₃, 0 bis 5 Gew.-% CaO und 45 bis 80 Gew.-% CaCO₃, wobei mindestens eines von MgO oder MgCO₃ vorliegt, und besonders bevorzugt ein durch eine thermische Behandlung von Dolomit auftretender Glühverlust 25 bis 50 Gew.-% beträgt.

Bei einer weiteren bevorzugten Ausführungsform enthält das anorganische Material 15 bis 30 Gew.-% MgO, 1 bis 21 Gew.-% MgCO₃, 0 bis 4 Gew.-% CaO und 63 bis 75 Gew.-% CaCO₃, wobei besonders bevorzugt ein durch eine thermische Behandlung von Dolomit auftretender Glühverlust 31 bis 39 Gew.-% beträgt.

Bei einer besonders bevorzugten Ausführungsform enthält das anorganische Material 23 bis 28 Gew.-% MgO, 2 bis 8 Gew.-% MgCO₃, 0 bis 2 Gew.-% CaO und 67 bis 72 Gew.-% CaCO₃, wobei noch mehr bevorzugt ein durch eine thermische Behandlung von Dolomit auftretender Glühverlust 31 bis 35 Gew.-% beträgt.

Die Erfindung kann besonders den Verschleiß von Beton durch den lösenden Angriff einer Säure, vorzugsweise der Kohlensäure, verringern oder sogar ganz vermeiden. Damit kann besonders vorteilhaft der Beton der Wände eines Belebungs- und/oder Nachklärbeckens in einer Abwasserreinigungsanlage mit Nitrifikation und Denitrifikation geschützt werden. Es hat sich nämlich gezeigt, dass insbesondere in Belebungs- und Nachklärbecken hohe Kohlensäurekonzentrationen auftreten können, vor allem bei Abwasserreinungunsanlagen oder Kläranlagen mit Nitrifikation und Denitrifikation.

Bei einer bevorzugten Ausführungsform wird nur ein Teilvolumenstrom von Abwasser, gegebenenfalls auch Belebtschlamm einer nach dem aeroben Belebtschlammverfahren betriebenen biologischen Abwasserreinungsanlage oder Kläranlage, durch einen Behälter geleitet, der als Füllmaterial das anorganische Material enthält. In dem Behälter wird das anorganische Material in Wasser gelöst. Bevorzugt werden als Teilvolumenstrom des Wassers oder Belebtschlamms 1 bis 100 %, insbesondere 1 bis 20 %, des Zulaufvolumenstroms der Abwasserreinigungsanlage, an einer geeigneten Stelle dem Klärprozess entnommen und durch den Behälter geleitet. Der in den Behälter eingeleitete Teilvolumenstrom des Abwassers oder Belebtschlamms wird mit dem Behälterfüllmaterial in einen intensiven Kontakt gebracht. Die Durchleitung durch den Behälter erfolgt vorzugsweise von unten nach oben. Anschließend kann das Abwasser oder der Belebtschlamm im freien Ablauf aus dem Behälter heraus und in das System der Abwasserreinigungsanlage oder Kläranlage, beispielsweise in ein Belebtschlammbecken, zurück geführt werden. Im Kontakt mit dem Abwasser oder dem wässrigen Belebtschlamm kann es zu einer ausreichenden Umwandlung der Inhaltsstoffe des anorganischen Materials zu Ca(OH)₂, Mg(OH)₂, Ca(HCO₃)₂, Mg(HCO₃)₂ sowie verwandten Verbindungen kommen. Die Stoffe werden im Laufe der Betriebszeit vollständig gelöst und können sich an den Wänden der Anlage abscheiden aber auch an die Belebtschlammflocke anlagern. Dadurch kann vorteilhaft auch die Flockenstruktur von Belebtschlamm stabilisiert werden, wobei der Gehalt an CaCO₃ der Flocke steigt. Auf diese Weise kann neben dem Schutz der Betonwände auch der Schlamm behandelt und in seiner Struktur stabilisiert werden.

Dadurch kann besonders vorteilhaft auch eine Bildung von Schwimmschlamm und Blähschlamm vermieden oder verhindert werden. Darüber hinaus können sich weitere Vorteile einstellen, wie ein verbessertes Absetzverhalten im Nachklärbecken, eine Stabilisierung der Nitrifikation, ein Ausgasen von Kohlensäure im Faulturm ohne Schaumbildung oder Spucken.

Das Behälterfüllmaterial kann in einer Korngröße < 20 mm, bevorzugt 2 bis 12 mm, vorliegen.

Die Schütthöhe des Behälterfüllmaterials kann 20 bis 500 cm, bevorzugt 60 bis 200 cm, betragen. Der Behälter sollte vorzugsweise gleichmäßig durchströmt werden. Ein gesicherter Betrieb ist insbesondere bei einer Beschickung des Behälters mit 1 bis 30 m³, bevorzugt 5 bis 15 m³, Wasser, Abwasser oder Schlamm pro Stunde und m² Querschnittsfläche des Behälters möglich. Anstelle eines einzigen Behälters kann auch eine Serie von Behältern bzw. eine Behälterkaskade eingesetzt werden.

### Beispiel 1

Ein erfindungsgemäß zu verwendendes anorganisches Material enthält die folgenden Bestandteile:

| | |
|---|---|
| MgO | : 25,3 Gew.-% |
| MgCO₃ | : 4,0 Gew.-% |
| CaO | : 0 Gew.-% |
| CaCO₃ | : 69,9 Gew.-%. |

Die Differenz zu 100 Gew.-% bilden Nebenbestandteile wie sie oben genannt wurden. Das anorganische Material ist ein thermisch behandelter Dolomit.

Mit einer Pumpe, die eine Förderleistung von 8,5 m³/h aufwies, wurde Belebtschlamm aus der Biologie einer Kläranlage von unten in einen Behälter eingedüst, der mit 1 m³ des anorganischen Materials nach Beispiel 1 befüllt war, um das anorganische Material in dem Belebtschlamm aufzulösen. Bei der Kläranlage handelte es sich um ein System, das für 30.000 Einwohnerwerte ausgelegt ist. Über einen Überlauf des Behälters wurde der Belebtschlamm wieder zurück in die Biologie geführt.

Der durchschnittliche Trockenwetterzulauf der Kläranlage betrug etwa 2.000 m³/Tag. Die Abwassermengen schwankten je nach Wetterlage zwischen 1.800 m³/Tag bei Trockenwetter und 6.000 m³/Tag bei Regenwetter. Mit der ausgewählten Pumpe, die eine Förderleistung von 8,5 m³/h aufwies, konnte ein Teilstromvolumen des Belebtschlamms durch den Behälter von etwa 10% des Trockenwetterzulaufs der Kläranlage erreicht werden. Der Teilvolumenstrom des Belebtschlamms durch den Behälter betrug 204 m³/Tag.

Im Beispiel 1 wurde im Versuchszeitraum etwa 4 Tonnen/Jahr von dem behandelten Dolomitgranulat verbraucht. Es wurde fortlaufend vom Anlagenpersonal in den Behälter gefüllt. Dabei wurde das Füllniveau durch das Nachfüllen auf dem gleichen Stand gehalten. Die Nachfüllmenge schwankte je nach Jahreszeit zwischen 50 kg pro Woche bis zu 100 kg pro Woche. Im Durchschnitt wurden 67 kg pro Woche nachgefüllt. Die Kontrolle für das Verfahren war einfach, da mit einem Messstab einzig und allein der Füllstand zu kontrollieren war und bei einem zu geringen Füllstand einfach Füllmaterial nachgefüllt wurde. Der einfache Aufbau und die einfache Wartung trägt vorteilhaft zur Vereinfachung des Schutzes von Beton vor einem lösenden Angriff bei.

Das im Beispiel 1 durchgeführte Verfahren wurde an vier weiteren Anlagen mit unterschiedlichen Zulaufbedingungen ausgeführt und führte zu ähnlichen Ergebnissen, wie sie im Beispiel 1 erhalten wurden.

In allen Anlagen wurde beobachtet, dass der Beton in den Anlagen vor einem lösenden Angriff sichtlich geschützt wurde. Insbesondere in den Belebungs- und/oder Nachklärbecken konnte kein weiterer sichtbarer lösender Angriff beobachtet werden.

## Patentansprüche

1. Verwendung eines anorganischen Materials, das ein Carbonat, Hydrogencarbonat, Oxid oder Hydroxid oder eine Mischung davon von Calcium und Magnesium enthält, in Abwasser zur Verringerung oder Vermeidung von Verschleiß von Beton durch einen lösenden Angriff.

2. Verwendung nach Anspruch 1 in einer ein Betonbecken umfassenden Abwasserreinigungsanlage.

3. Verwendung nach Anspruch 2, zur Verringerung oder Vermeidung des Verschleißes von mit Abwasser in Kontakt kommenden Wänden des Betonbeckens.

4. Verwendung nach einem der Ansprüche 1 bis 3, der lösende Angriff erfolgt durch eine Säure, vorzugsweise eine anorganische Säure, besonders bevorzugt Kohlensäure.

5. Verwendung nach einem der Ansprüche 1 bis 4, wobei das anorganische Material Dolomit, vorzugsweise MgO, MgCO₃, CaO und CaCO₃, besonders bevorzugt thermisch behandelten Dolomit, enthält.

6. Verwendung nach einem der Ansprüche 1 bis 5, wobei das anorganische Material 0 bis 30 Gew.-% MgO, 0 bis 50 Gew.-% MgCO₃, 0 bis 5 Gew.-% CaO und 45 bis 80 Gew.-% CaCO₃ enthält und vorzugsweise ein durch die thermische Behandlung von Dolomit auftretender Glühverlust 25 bis 50 Gew.-% beträgt.

7. Verwendung nach einem der Ansprüche 1 bis 6, wobei das anorganische Material 15 bis 30 Gew.-% MgO, 1 bis 21 Gew.-% MgCO₃, 0 bis 4 Gew.-% CaO und 63 bis 75 Gew.-% CaCO₃ enthält und vorzugsweise ein durch die thermische Behandlung von Do!omit auftretender Glühverlust 31 bis 39 Gew.-% beträgt.

8. Verwendung nach einem der Ansprüche 1 bis 7, wobei das anorganische Material 23 bis 28 Gew.-% MgO, 2 bis 8 Gew.-% MgCO₃, 0 bis 2 Gew.-% CaO und 67 bis 72 Gew.-% CaCO₃ enthält und vorzugsweise ein durch die thermische Behandlung von Dolomit auftretender Glühverlust 31 bis 35 Gew.-% beträgt.

9. Verwendung nach einem der Ansprüche 1 bis 8, wobei das anorganische Material mit Wasser und/oder Kohlendioxid zu Ca(OH)₂, Mg(OH)₂, Ca(HCO₃)₂, Mg(HCO₃)₂ und verwandten Verbindungen reagiert.

10. Verwendung nach einem der Ansprüche 1 bis 9 zum Schutz der Wände eines Belebungs- und/oder Nachklärbeckens in einer Abwasserreinigungsanlage mit Nitrifikation und Denitrifikation.
